# EUROPÄISCHE PATENTANMELDUNG

(11) **EP 2 789 242 A2**
(43) Veröffentlichungstag der Anmeldung: **15.10.2014**
(21) Anmeldenummer: 14154071.6
(22) Anmeldetag: 06.02.2014
(51) Int. Cl.: A22C 17/00

(54) **Tragstruktur**

(30) Priorität: 08.04.2013 DE 102013206137
(71) Anmelder: Weber Maschinenbau GmbH Breidenbach, 35236 Breidenbach (DE)
(72) Erfinder: Bauer, Sigfried, 17091 Groß Teetzleben (DE)
(74) Vertreter: Manitz, Finsterwald & Partner GbR

(57) **Zusammenfassung**

Eine Tragstruktur (11) für eine Vorrichtung zur Verarbeitung von Lebensmittelprodukten weist wenigstens zwei lösbar miteinander verbindbare Tragstrukturmodule (13a,13b,13c) auf. Jedes der wenigstens zwei Tragstrukturmodule umfasst wenigstens ein endseitiges Platten- oder Profilelement (15) mit einer nach außen gewandten Seite (22), wobei zur Verbindung zweier Tragstrukturmodule die nach außen gewandten Seiten jeweiliger endseitiger Platten- oder Profilelemente mittels wenigstens eines Abstandshalters (20,21) verbunden sind.

## Beschreibung

Die vorliegende Erfindung betrifft eine Tragstruktur für eine Vorrichtung zur Verarbeitung von Lebensmittelprodukten.

Bei der industriellen Verarbeitung von Lebensmittelprodukten wie z.B. Fleisch-, Wurst- oder Käseprodukten kommen verschiedene Einzelvorrichtungen wie Slicer, Förderer, Einleger und Querverteiler zum Einsatz, welche zum Aufbau einer Produktionslinie in einer bestimmten Konstellation miteinander zu kombinieren sind. Üblicherweise werden hierbei die Tragstrukturen oder Rahmen der entsprechenden Einzelvorrichtungen miteinander verbunden, beispielsweise verschraubt.

In der Praxis ist eine solche Verbindung mehrerer Einzelvorrichtungen zu einer Gesamtvorrichtung häufig mit Schwierigkeiten verbunden, weil beispielsweise die Tragstrukturen nicht zueinander passen oder prinzipiell nicht für einen Anbau zusätzlicher Komponenten ausgelegt sind. Zudem sind die Verbindungsstellen zwischen zwei gekoppelten Tragstrukturen oft schlecht zu reinigen, so dass die hohen hygienischen Anforderungen im Bereich der Verarbeitung von Lebensmittelprodukten nicht oder nur unter hohem Aufwand erfüllt werden können.

Es ist daher eine Aufgabe der Erfindung, eine Tragstruktur für eine Vorrichtung zur Verarbeitung von Lebensmittelprodukten anzugeben, welche leicht zu reinigen ist und auf einfache Weise an individuelle Anwendungsvorgaben angepasst werden kann.

Die Lösung der Aufgabe erfolgt durch eine Tragstruktur mit den Merkmalen des Anspruchs 1.

Erfindungsgemäß weist eine Tragstruktur wenigstens zwei lösbar miteinander verbindbare Tragstrukturmodule auf, wobei jedes der wenigstens zwei Tragstrukturmodule wenigstens ein endseitiges Platten- oder Profilelement mit einer nach außen gewandten Seite umfasst, und wobei zur Verbindung zweier Tragstrukturmodule die nach außen gewandten Seiten jeweiliger endseitiger Platten- oder Profilelemente mittels wenigstens eines Abstandshalters verbunden sind.

Die Platten- oder Profilelementen können plattenartig, also flächig und eben, sein. Alternativ kann es sich bei den Platten- oder Profilelementen jedoch auch um solche Bauteile handeln, welche in beliebiger Richtung ein- oder mehrfach abgewinkelt sind - also z.B. um Profilstrukturen wie L-, C- oder U-Profile. Die nach außen gewandte Seite eines Platten- oder Profilelements kann insbesondere eine Flachseite sein, wobei dies aber nicht zwingend ist, d.h. eine oder mehrere Abwinkelungen des Elements können nach innen und/oder nach außen erfolgen. Wenn das Element eine Flachseite aufweist, kann diese nach innen oder nach außen weisen.

Die Aufteilung der Tragstruktur in mehrere Tragstrukturmodule hat den Vorteil, dass auf einfache und schnelle Weise unterschiedliche Arten von Verarbeitungsvorrichtungen zusammengestellt werden können. Durch die Verbindung der zwei endseitigen Platten- oder Profilelemente über einen Abstandshalter ergibt sich in ähnlicher Weise wie bei einem Doppel-T-Träger eine vergleichsweise hohe Biegesteifigkeit der Gesamtstruktur. Der Abstandshalter verhindert außerdem ein direktes Anliegen der beiden aufeinanderfolgenden Platten- oder Profilelemente. Aneinander anliegende Plattenoberflächen stellen aufgrund des sich zwischen ihnen ausbildenden, schlecht zu reinigenden Spalts ein Hygieneproblem dar. Erfindungsgemäß sind durch Verwendung des Abstandshalters dagegen beide nach außen gewandten Seiten der Platten- oder Profilelemente einer Reinigung zugänglich. Der hygienische Standard einer durch die Tragstruktur getragenen Lebensmittelverarbeitungsvorrichtung kann somit bedeutend erhöht werden.

Weiterbildungen der Erfindung sind in den abhängigen Ansprüchen, der Beschreibung sowie der beigefügten Zeichnung angegeben.

Vorzugsweise umfasst wenigstens eines der Tragstrukturmodule und bevorzugt jedes der Tragstrukturmodule zwei gegenüberliegende endseitige Platten- oder Profilelemente, welche durch wenigstens einen Längsträger miteinander verbunden sind. Die Tragstruktur ist dann an ihren freien Stirnseiten auf einfache Weise durch weitere erfindungsgemäße Tragstrukturmodule erweiterbar. Ferner kann durch die Verbindung zweier endseitiger Platten- oder Profilelemente mittels eines Längsträgers eine vergleichsweise hohe Biegesteifigkeit erzielt werden.

Der wenigstens eine Längsträger kann mit dem wenigstens einen Abstandshalter fluchten, wodurch sich eine besonders leicht zu reinigende Oberflächenstruktur der Gesamtanordnung ergibt. Zudem kann die Befestigung des Längsträgers am zugehörigen Platten- oder Profilelement mit der Befestigung des mit dem Längsträger fluchtenden Abstandshalters kombiniert werden.

Eine spezielle Ausgestaltung der Erfindung sieht vor, dass der wenigstens eine Abstandshalter mit den jeweiligen endseitigen Platten- oder Profilelementen verschraubt ist. Die Verschraubung kann bei Bedarf leicht gelöst werden, um beispielsweise eine bestehende Gesamtanlage umzukonfigurieren. Je nach Stabilitätsanforderung können die beiden endseitigen Platten- oder Profilelemente eines Tragstrukturmoduls auch durch mehr als einen Längsträger, beispielsweise durch drei bis fünf über den äußeren Randbereich der Platten- oder Profilelemente verteilt angeordnete Längsträger, miteinander verbunden sein.

Weiterhin kann es vorgesehen sein, dass zur Verbindung zweier Tragstrukturmodule wenigstens drei und bevorzugt wenigstens fünf Abstandshalter vorgesehen sind, welche über die nach außen gewandten Seiten der Platten- oder Profilelemente verteilt angeordnet sind. Insbesondere können die Abstandshalter gleichmäßig über einen äußeren Randbereich der Platten- oder Profilelemente verteilt angeordnet sein. Durch Vorsehen mehrerer verteilter Abstandshalter kann die Biegesteifigkeit der Tragstruktur weiter gesteigert werden.

Eine Ausführungsform der Erfindung sieht vor, dass die Platten- oder Profilelemente jeweils U-förmig und/oder als zumindest ein Bestandteil eines Portalbogens ausgebildet sind, wobei insbesondere die Platten- oder Profilelemente nach unten geöffnet sind. Die durch derartige Platten- oder Profilelemente gebildeten Portalbögen können beispielsweise die zu tragenden Komponenten der Lebensmittelverarbeitungsvorrichtung umschließen, d.h. eine Einfassung für die Maschinenkomponenten bilden. Dies verleiht der Gesamtanlage besondere Stabilität. Die beiden vertikalen Schenkel eines portalbogenartigen Platten- oder Profilelements können hierbei Stützsäulen der Tragstruktur bilden, so dass sich das Vorsehen separater Stützsäulen erübrigt.

Gemäß einer weiteren Ausführungsform der Erfindung weist wenigstens eines der Tragstrukturmodule, insbesondere ein Endmodul der Tragstruktur, an einem Ende zwei aufeinander folgende und über wenigstens einen Abstandshalter verbundene Platten- oder Profilelemente auf. Das zusätzliche endseitige Platten- oder Profilelement kann der Anbindung einer weiteren Tragstruktur oder einer eigenständigen Verarbeitungsvorrichtung dienen. Prinzipiell können auch zwei Endmodule direkt miteinander verbunden sein.

Eine spezielle Ausgestaltung der Erfindung sieht vor, dass wenigstens zwei lösbar miteinander verbindbare Tragstrukturmodule vorgesehen sind, welche bezüglich einer Verarbeitungsrichtung der Vorrichtung zur Verarbeitung von Lebensmittelprodukten hintereinander angeordnet sind. Auf diese Weise kann eine beliebig lange Verarbeitungsstrecke aus einzelnen, prinzipiell gleichartigen Tragstrukturmodulen aufgebaut werden.

Um den Herstellungsaufwand bei gegebener Stabilitätsanforderung gering zu halten, können die Platten- oder Profilelemente als Stahlbleche oder Stahlprofile ausgeführt sein. Die Formgebung solcher als Stahlbleche oder Stahlprofile ausgeführten Platten- oder Profilelemente, insbesondere die Formung zu Portalbögen wie vorstehend beschrieben, erfolgt hierbei vorzugsweise mittels Laserschneiden.

Eine weitere Ausführungsform der Erfindung sieht vor, dass der oder wenigstens ein weiterer Abstandshalter an einer Unterseite der jeweiligen Platten- oder Profilelemente angeordnet ist und als Standfuß für die Tragstruktur ausgebildet ist. Ein solcher Abstandshalter erfüllt also eine Doppelfunktion, indem er einerseits für ein sicheres Abstützen der Tragstruktur auf dem Boden sorgt und andererseits zur stabilen Verbindung der beiden Platten- oder Profilelemente beiträgt. Bei Bedarf kann ein derartiger Standfuß höhenverstellbar ausgeführt sein.

Gemäß einer weiteren Ausgestaltung der Erfindung trägt wenigstens eines der Tragstrukturmodule eine Fördereinrichtung zum Fördern von Lebensmittelprodukten oder ist zu diesem Zweck ausgebildet. Durch eine Hintereinanderschaltung mehrerer derartiger Tragstrukturmodule einschließlich der durch sie getragenen Fördereinrichtungen ist der Aufbau von langen und komplexen Förderstrecken, wie sie bei vielen modernen Produktionslinien benötigt werden, auf vergleichsweise einfache Weise möglich.

Die Erfindung betrifft auch ein Tragstrukturmodul für eine Tragstruktur wie vorstehend beschrieben, wobei das Tragstrukturmodul wenigstens ein endseitiges Platten- oder Profilelement mit einer nach außen gewandten Seite umfasst und zur Verbindung mit einem weiteren Tragstrukturmodul an der nach außen gewandten Seite des Platten- oder Profilelements mit wenigstens einem Abstandshalter versehen oder zur Kopplung mit einem solchen Abstandshalter ausgebildet ist. Ein solches Tragstrukturmodul kann die Grundlage für ein Baukastensystem zur Erstellung unterschiedlicher Konfigurationen von Lebensmittelverarbeitungsvorrichtungen bilden.

Die Erfindung wird nachfolgend beispielhaft unter Bezugnahme auf die Zeichnung beschrieben.
- Fig. 1: zeigt in einer Seitenansicht drei Tragstrukturmodule für eine erfindungsgemäße Tragstruktur in voneinander gelöstem Zustand.
- Fig. 2: zeigt die Tragstrukturmodule gemäß Fig. 1 in miteinander verbundenem Zustand.
- Fig. 3: ist eine Stirnansicht eines Platten- oder Profilelements der Tragstruktur gemäß Fig. 1.
- Fig. 4: ist eine vergrößerte seitliche Schnittdarstellung eines Abstandshalters, mittels welchem zwei Platten- oder Profilelemente gemäß Fig. 3 verbunden sind.
- Fig. 5: ist eine seitliche Teilansicht zweier miteinander verbundener Platten- oder Profilelemente gemäß Fig. 3.

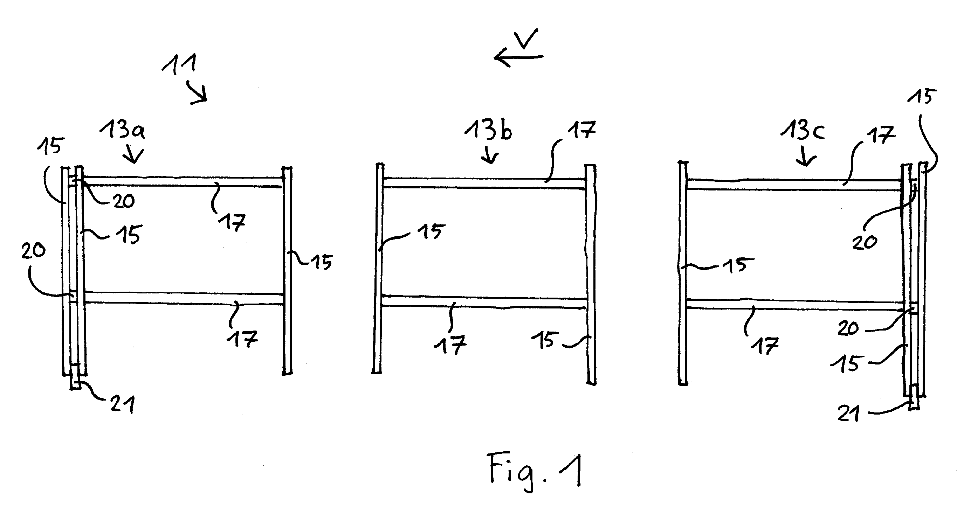

Fig. 1 zeigt eine Tragstruktur 11 für eine Vorrichtung zur Verarbeitung von Lebensmittelprodukten, welche ein in Verarbeitungsrichtung V der Vorrichtung 11 gesehen vorderes Tragstrukturmodul 13a, ein mittleres Tragstrukturmodul 13b und ein hinteres Tragstrukturmodul 13c umfasst. Die Tragstrukturmodule 13a, 13b, 13c sind in Fig. 1 in voneinander gelöstem Zustand dargestellt. Jedes der Tragstrukturmodule 13a, 13b, 13c umfasst zwei endseitige, parallel zueinander angeordnete Platten- oder Profilelemente 15, welche durch eine Anordnung von Längsträgern 17 - hier als zylindrische oder hohlzylindrische Stangen ausgeführt - miteinander verbunden sind. Die Anzahl der entlang der Verarbeitungsrichtung V hintereinander angeordneten Tragstrukturmodule 13a, 13b, 13c richtet sich nach der jeweiligen Anwendung und kann auch bedeutend mehr als drei betragen. Außerdem könnten auch lediglich zwei Tragstrukturmodule hintereinander angeordnet sein, beispielsweise das vordere Tragstrukturmodul 13a und das hintere Tragstrukturmodul 13c. Bei dem dargestellten Ausführungsbeispiel sind die Platten- oder Profilelemente 15 flächig und eben, d.h. als reine Plattenelemente, ausgeführt. Alternativ könnten auch einige oder alle Platten- oder Profilelemente 15 als Profilelemente mit z.B. L-, C- oder U-förmigem Querschnitt ausgeführt sein, wobei auch unterschiedliche Querschnittsformen miteinander kombiniert werden können, d.h. z.B. an einem Modul sowohl eine U-Form als auch eine L-Form oder sowohl eine C-Form und eine reine ebene Form (reines Plattenelement).

Das vordere Tragstrukturmodul 13a und das hintere Tragstrukturmodul 13c bilden bei dem dargestellten Ausführungsbeispiel Endmodule und weisen daher jeweils an einem freien Ende ein zusätzliches Platten- oder Profilelement 15 auf, das über eine Anordnung von Abstandshaltern 20 mit dem anderen vorhandenen Platten- oder Profilelement 15 gekoppelt ist. Die Abstandshalter 20 sind vorzugsweise zumindest abschnittsweise zylindrisch und fluchten mit den Längsträgern 17. An einem unteren Ende des vorderen Tragstrukturmoduls 13a und des hinteren Tragstrukturmoduls 13c sind zudem höhenverstellbare Standfüße 21 angeordnet, welche ebenfalls Abstandshalter bilden.

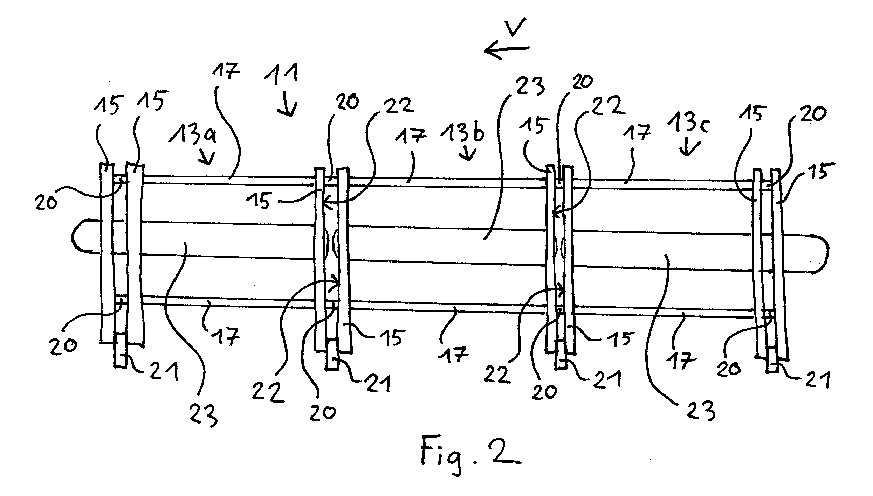

Fig. 2 zeigt die drei Tragstrukturmodule 13a, 13b, 13c in miteinander verbundenem Zustand. Hierbei sind jeweils die nach außen gewandten Flachseiten 22 einander gegenüberliegender Platten- oder Profilelemente 15 zweier benachbarter Tragstrukturmodule 13a, 13b, 13c mittels Abstandshaltern 20 gekoppelt, welche mit den Längsträgern 17 fluchten. Am unteren Ende zweier miteinander verbundener Platten- oder Profilelemente 15 sind wiederum höhenverstellbare Standfüße 21 als zusätzliche Abstandshalter angeordnet. Durch die Verbindung der drei Tragstrukturmodule 13a, 13b, 13c über jeweilige "Doppel-T-Träger"-artige Anordnungen aus Platten- oder Profilelementen 15 und Abstandshaltern 20, 21 ist eine biegesteife Tragstruktur 11 gebildet, die verschiedene Komponenten einer Lebensmittel-Verarbeitungsstrecke aufnehmen kann. Beispielhaft ist in Fig. 2 eine Anordnung von Bandförderern 23 gezeigt.

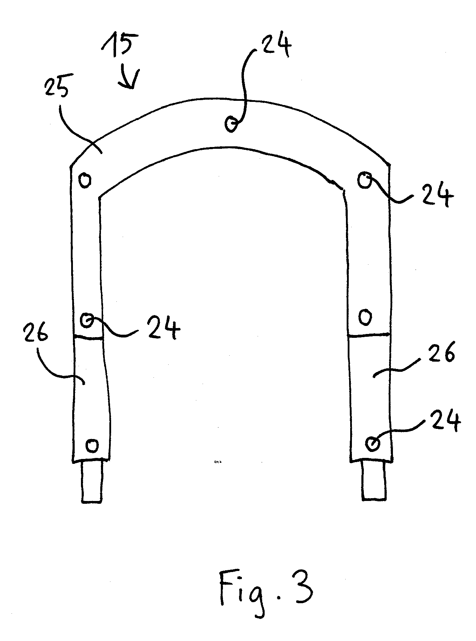

Die Form der für die Tragstruktur 11 verwendeten Platten- oder Profilelemente 15 geht aus der Stirnansicht gemäß Fig. 3 hervor. Demgemäß ist jedes Platten- oder Profilelement 15 als lasergeschnittenes Stahlblech ausgeführt und weist eine portalbogenartige Form auf. Durchführungen 24, welche über die Fläche des Platten- oder Profilelements 15 verteilt angeordnet sind, dienen hierbei einer Verschraubung des Platten- oder Profilelements 15 mit Längsträgern 17 bzw. mit Abstandshaltern 20 und Standfüßen 21, wie nachfolgend noch genauer ausgeführt wird. Aus Fig. 3 geht auch hervor, dass jedes Platten- oder Profilelement 15 mehrteilig ausgeführt ist und ein Oberteil 25 sowie zwei Unterteile 26 umfasst. Ein Vorteil der portalbogenartigen Form besteht darin, dass eine zu tragende Komponente einer Lebensmittelverarbeitungsvorrichtung durch die Anordnung von Platten- oder Profilelementen 15 gewissermaßen umrahmt wird.

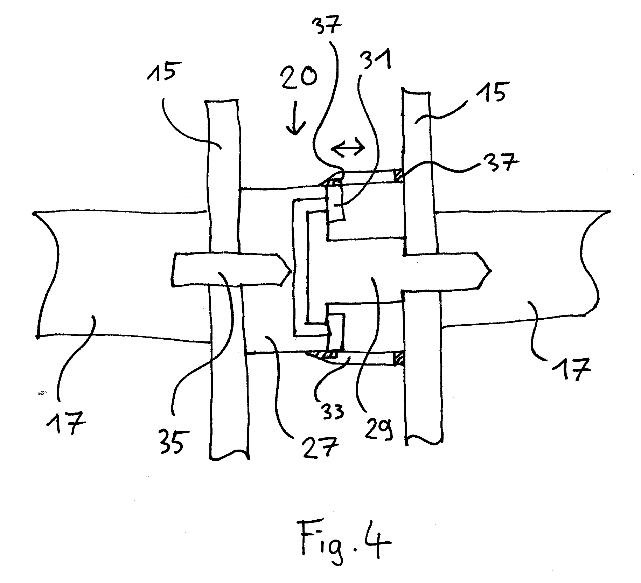

Die vergrößerte Schnittansicht gemäß Fig. 4 verdeutlicht die Art der Verbindung zweier Platten- oder Profilelemente 15 mittels eines Abstandshalters 20. Demgemäß umfasst ein Abstandshalter 20 ein erstes Verbindungsteil 27, welches beispielsweise über einen Schraubbolzen 35 mit einem der Platten- oder Profilelemente 15 und mit dem zugehörigen Längsträger 17 verschraubt ist, sowie ein zweites Verbindungsteil 29, welches mit dem anderen Platten- oder Profilelement 15 sowie dessen zugehörigem Längsträger 17 verschraubt ist. Die beiden Verbindungsteile 27, 29 können mittels eines Halterings 31 sowie einer Gewindehülse 33 gegeneinander festgelegt werden.

Bei der Montage werden zunächst die beiden Verbindungsteile 27, 29 an den jeweiligen Platten- oder Profilelementen 15 angeschraubt. Die Gewindehülse 33 wird dann in Fig. 4 nach links zurückgeschraubt und die beiden Verbindungsteile 27, 29 werden ineinander gesteckt. Aufgrund der zurückgeschraubten Gewindehülse 33 kann in diesem Zustand der Haltering 31 auf das erste Verbindungsteil 27 aufgeschraubt werden, wobei in der Folge Zugkräfte über die Verbindung übertragbar sind. Anschließend wird die Gewindehülse 33 solange in Fig. 4 nach rechts geschraubt, bis sie am rechten Platten- oder Profilelement 15 anschlägt. Dadurch ist auch die Übertragung von Druckkräften über die Verbindung möglich.

Da die äußere Form des resultierenden Abstandshalters 20 abschnittsweise zylindrisch ist, ist die Reinigung der Verbindungsstelle vergleichsweise einfach. Um ein unerwünschtes Eindringen von Verunreinigungen in das Innere des Abstandshalters 20 zu vermeiden, ist die Gewindehülse 33 mit entsprechenden Dichtungselementen 37 versehen.

Ein Vorteil der in Fig. 4 dargestellten Konstruktion der Abstandshalter 20 besteht darin, dass zwei unterschiedliche Arten der Montage möglich sind. Zum einen kann eine Verschraubung zweier vollständig vormontierter Tragstrukturmodule 13a, 13b, 13c erfolgen. Zum anderen ist es auch möglich, bei einer Tragstruktur 11 mit bereits miteinander verbundenen Tragstrukturmodulen 13a, 13b, 13c im Nachhinein Längsträger 17 zu montieren oder zu demontieren.

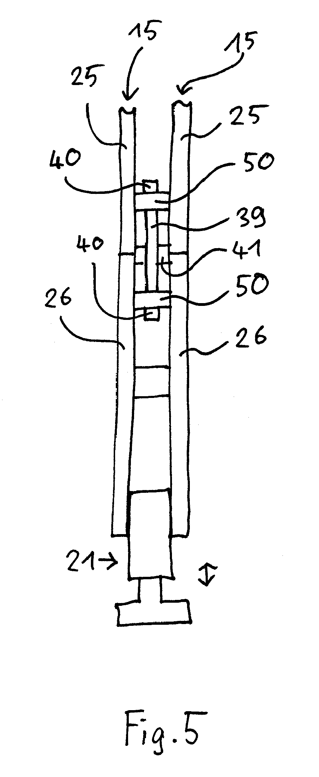

Fig. 5 zeigt die Verbindung der Oberteile 25 sowie der Unterteile 26 zweier miteinander verbundener Platten- oder Profilelemente 15. Zum Zusammenhalten der Oberteile 25 und der Unterteile 26 in vertikaler Richtung ist eine Zugstange 39 vorgesehen, welche durch zwei Haltebolzen 50 hindurchgeführt und mittels Schrauben 40 verspannt ist. Eine Querverschiebung der beiden Platten- oder Profilelemente 15 wird hierbei durch ein abgesetztes Stangenelement 41 verhindert. In Fig. 5 ist weiterhin ein höhenverstellbarer Standfuß 21 genauer dargestellt.

Für den Bau einer Vorrichtung zur Verarbeitung von Lebensmittelprodukten werden einzelne Maschinenkomponenten wie z.B. die in Fig. 2 gezeigten Bandförderer 23 in jeweilige Tragstrukturmodule 13a, 13b, 13c eingesetzt und die Tragstrukturmodule 13a, 13b, 13c werden vollständig vormontiert. Am Bestimmungsort werden die Tragstrukturmodule 13a, 13b, 13c dann unter Verwendung von Abstandshaltern 20 sowie gegebenenfalls Standfüßen 21 zu einer Gesamtvorrichtung verbunden. Die erforderliche Steifigkeit der Tragstruktur 11 wird erst nach dem Verbinden der Tragstrukturmodule 13a, 13b, 13c erreicht. Es versteht sich, dass es eine Vielzahl von Gestaltungsmöglichkeiten beim Bau einer Verarbeitungsvorrichtung aus unterschiedlichen Tragstrukturmodulen 13a, 13b, 13c mit entsprechenden Maschinenkomponenten gibt.

### Bezugszeichenliste

- 11: Tragstruktur
- 13a: vorderes Tragstrukturmodul
- 13b: mittleres Tragstrukturmodul
- 13c: hinteres Tragstrukturmodul
- 15: Platten- oder Profilelement
- 17: Längsträger
- 20: Abstandshalter
- 21: Standfuß
- 22: nach außen gewandte Flachseite
- 23: Bandförderer
- 24: Durchführung
- 25: Oberteil
- 26: Unterteil
- 27: erstes Verbindungsteil
- 29: zweites Verbindungsteil
- 31: Haltering
- 33: Gewindehülse
- 35: Schraubbolzen
- 37: Dichtungselement
- 39: Zugstange
- 40: Schraube
- 41: abgesetztes Stangenelement
- 50: Haltebolzen

- V: Verarbeitungsrichtung

## Patentansprüche

1. Tragstruktur (11) für eine Vorrichtung zur Verarbeitung von Lebensmittelprodukten, welche wenigstens zwei lösbar miteinander verbindbare Tragstrukturmodule (13a, 13b, 13c) aufweist, wobei jedes der wenigstens zwei Tragstrukturmodule (13a, 13b, 13c) wenigstens ein endseitiges Platten- oder Profilelement (15) mit einer nach außen gewandten Seite (22) umfasst, wobei zur Verbindung zweier Tragstrukturmodule (13a, 13b, 13c) die nach außen gewandten Seiten (22) jeweiliger endseitiger Platten- oder Profilelemente (15) mittels wenigstens eines Abstandshalters (20, 21) verbunden sind.

2. Tragstruktur nach Anspruch 1,
**dadurch gekennzeichnet, dass**
wenigstens eines der Tragstrukturmodule (13a, 13b, 13c) und bevorzugt jedes der Tragstrukturmodule (13a, 13b, 13c) zwei gegenüberliegende endseitige Platten- oder Profilelemente (15) umfasst, welche durch wenigstens einen Längsträger (17) miteinander verbunden sind.

3. Tragstruktur nach Anspruch 2,
**dadurch gekennzeichnet, dass**
der wenigstens eine Längsträger (17) mit dem wenigstens einen Abstandshalter (20) fluchtet.

4. Tragstruktur nach zumindest einem der vorstehenden Ansprüche,
**dadurch gekennzeichnet, dass**
der wenigstens eine Abstandshalter (20, 21) mit den jeweiligen endseitigen Platten- oder Profilelementen (15) verschraubt ist.

5. Tragstruktur nach zumindest einem der vorstehenden Ansprüche,
**dadurch gekennzeichnet, dass**
zur Verbindung zweier Tragstrukturmodule (13a, 13b, 13c) wenigstens drei und bevorzugt wenigstens fünf Abstandshalter (20, 21) vorgesehen sind, welche über die nach außen gewandten Seiten (22) der Platten- oder Profilelemente (15) verteilt angeordnet sind.

6. Tragstruktur nach zumindest einem der vorstehenden Ansprüche,
**dadurch gekennzeichnet, dass**
die Platten- oder Profilelemente (15) jeweils U-förmig und/oder als zumindest ein Bestandteil eines Portalbogens ausgebildet sind, wobei insbesondere die Platten- oder Profilelemente (15) nach unten geöffnet sind.

7. Tragstruktur nach zumindest einem der vorstehenden Ansprüche,
**dadurch gekennzeichnet, dass**
wenigstens eines der Tragstrukturmodule (13a, 13b, 13c), insbesondere ein Endmodul (13a, 13c) der Tragstruktur (11), an einem Ende zwei aufeinanderfolgende und über wenigstens einen Abstandshalter (20, 21) verbundene Platten- oder Profilelemente (15) aufweist.

8. Tragstruktur nach zumindest einem der vorstehenden Ansprüche,
**dadurch gekennzeichnet, dass**
wenigstens zwei lösbar miteinander verbindbare Tragstrukturmodule (13a, 13b, 13c) vorgesehen sind, welche bezüglich einer Verarbeitungsrichtung (V) der Vorrichtung zur Verarbeitung von Lebensmittelprodukten hintereinander angeordnet sind.

9. Tragstruktur nach zumindest einem der vorstehenden Ansprüche,
**dadurch gekennzeichnet, dass**
die Platten- oder Profilelemente (15) als Stahlbleche oder Stahlprofile ausgeführt sind.

10. Tragstruktur nach zumindest einem der vorstehenden Ansprüche,
**dadurch gekennzeichnet, dass**
der oder wenigstens ein weiterer Abstandshalter (21) an einer Unterseite der jeweiligen Platten- oder Profilelemente (15) angeordnet ist und als Standfuß für die Tragstruktur (11) ausgebildet ist.

11. Tragstruktur nach zumindest einem der vorstehenden Ansprüche,
**dadurch gekennzeichnet, dass**
wenigstens eines der Tragstrukturmodule (13a, 13b, 13c) eine Fördereinrichtung (23) zum Fördern von Lebensmittelprodukten trägt oder zu diesem Zweck ausgebildet ist.

12. Tragstrukturmodul (13a, 13b, 13c) für eine Tragstruktur (11) nach zumindest einem der vorstehenden Ansprüche, wobei das Tragstrukturmodul (13a, 13b, 13c) wenigstens ein endseitiges Platten- oder Profilelement (15) mit einer nach außen gewandten Seite (22) umfasst und zur Verbindung mit einem weiteren Tragstrukturmodul (13a, 13b, 13c) an der nach außen gewandten Seite (22) des Platten- oder Profilelements (15) mit wenigstens einem Abstandshalter (20, 21) versehen oder zur Kopplung mit einem solchen Abstandshalter (20, 21) ausgebildet ist.
